# EUROPEAN PATENT SPECIFICATION

(11) **EP 3 319 196 B1**
(45) Date of publication and mention of the grant of the patent: **27.04.2022**
(21) Application number: 15896747.1
(22) Date of filing: 30.06.2015
(51) Int. Cl.: H02J 7/00

(54) **CHARGING CONTROL CIRCUIT, CHARGING DEVICE, CHARGING SYSTEM AND CHARGING CONTROL METHOD**
LADESTEUERUNGSSCHALTUNG, LADEVORRICHTUNG, LADESYSTEM UND LADESTEUERUNGSVERFAHREN
CIRCUIT DE COMMANDE DE CHARGE, DISPOSITIF DE CHARGE, SYSTÈME DE CHARGE ET PROCÉDÉ DE COMMANDE DE CHARGE

(43) Date of publication of application: 09.05.2018
(73) Proprietor: SZ DJI Technology Co., Ltd., Shenzhen, Guangdong 518057 (CN)
(72) Inventor: ZHENG, Dayang, Shenzhen Guangdong 518057 (CN); LIU, Yuancai, Shenzhen Guangdong 518057 (CN); WANG, Lei, Shenzhen Guangdong 518057 (CN); WANG, Wentao, Shenzhen Guangdong 518057 (CN); ZHAN, Juncheng, Shenzhen Guangdong 518057 (CN)
(74) Representative: Appelt, Christian W.
(86) International application number: PCT/CN2015/082827
(87) International publication number: WO 2017/000216

(56) References cited:
- CN-A- 1 437 295
- CN-A- 1 574 447
- CN-A- 102 623 768
- CN-U- 204 361 767
- US-A- 5 808 442
- US-A- 5 808 442
- None

## Description

### TECHNICAL FIELD

The present disclosure generally relates to the field of battery charging technologies, and in particular, to charging control circuits, charging devices, charging systems and charging control methods.

### BACKGROUND

At present, portable mobile terminals, cameras, photographic apparatuses and other electronic devices are generally equipped with a plurality of rechargeable batteries. When battery power is used up, it is necessary to use a charger to charge the plurality of batteries.

A common charging manner on the market at present is connecting a plurality of rechargeable batteries in parallel, to uniformly charge a rechargeable battery pack in parallel connection. However, the manner has lots of shortcomings, for example, after the rechargeable batteries having different voltage values are connected in parallel, it may result in high voltage batteries discharging to low voltage batteries. Generally the discharge current may be very large, therefore it is easy to cause danger. In addition, after the plurality of rechargeable batteries are connected in parallel, in the process of charging, it is likely that a charger first charges the low voltage batteries, because the batteries will be fully charged together at the same time, and if it is intended to use a battery already fully charged in the process of charging, the user has to wait for a longer time, which is not convenient for use by users. A charger for Li-ion batteries is disclosed in patent document US 5 808 442 A.

### SUMMARY

In view of the aforementioned contents, it is necessary to provide more convenient charging control circuits, charging devices, charging systems and charging control methods. In order to solve the technical problem, a solution is proposed. The invention representing the solution is defined in the appended independent claims. Preferred embodiments are defined by the dependent claims.

A charging control circuit, including:
a charging unit;
a plurality of power output ends, respectively used to connect with a plurality of rechargeable batteries and charge the plurality of rechargeable batteries;
a switch unit, wherein the switch unit is connected between the charging unit and the plurality of power output ends;
a control unit electrically connected with the switch unit; and
a mode switching unit electrically connected with the control unit;
wherein the control unit switches to a first charging mode or a second charging mode in accordance with a switching signal sent by the mode switching unit, and outputs a corresponding switch signal to the switch unit; and the switch unit switches on or switches off electrical connections between the charging unit and the plurality of power output ends in accordance with the switch signal.

Further, the switch unit may be a relay switch;
or
a MOS transistor, wherein a source of the MOS transistor is electrically connected with the charging unit, a drain of the MOS transistor is electrically connected with the corresponding power output end, and a gate of the MOS transistor is electrically connected with the control unit;
or
the switch unit may be a NPN type triode, a collector is electrically connected with the charging unit, an emitter is electrically connected with the corresponding power output end, and a base is electrically connected with the control unit.

Further, the control unit may be one of a Field-Programmable Gate Array (FPGA), a Micro-Controller Unit (MCU) with a control program embedded therein or a single chip computer.

Further, the switching signal output by the mode switching unit may be implemented by means of hardware or software.

Further, the mode switching unit may include a button, to output the switching signal by operating the button;
or
the mode switching unit includes an automatic switching circuit, the automatic switching circuit being used to automatically output the switching signal after detecting a preset trigger condition.

Further, the charging control circuit may further include a voltage collection unit, the voltage collection unit being connected between the charging unit and the switch unit, and connected to the control unit; the voltage collection unit is used to collect voltage values of the rechargeable batteries, and the control unit, in accordance with the voltage values collected by the voltage collection unit, controls switch-on or switch-off of electrical connections between the plurality of power output ends and the charging unit through the switch unit.

Further, the control unit controls the plurality of power output ends to be switched on with the charging unit one by one through the switch unit, to control the voltage collection unit to collect a battery voltage of each rechargeable battery.

Further, when the control unit switches to the first charging mode, the control unit controls the switch unit to, in accordance with an order of battery voltages from high to low, sequentially switch on the power output end which corresponds to the rechargeable battery with the maximum voltage value among the plurality of rechargeable batteries, and power off the other power output ends, so as to control the charging unit to sequentially charge the plurality of rechargeable batteries to a first preset value, and then switch on all the plurality of power output ends, to cause the charging unit to charge all the rechargeable batteries once again and charge the rechargeable batteries to a second preset value.

Further, the control unit controls the plurality of power output ends to be switched on with the charging unit one by one through the switch unit, so as to make the voltage collection unit detect battery voltages of the plurality of rechargeable batteries one by one, and the control unit further controls the power output end, which corresponds to the rechargeable battery with the maximum voltage value among the battery voltages detected, to be switched on and the other power output ends to be powered off, to cause the charging unit to charge the rechargeable battery with the maximum battery voltage value to the first preset value.

Further, when the control unit switches to the second charging mode, the control unit controls the switch unit to, in accordance with an order of battery voltages of the rechargeable batteries from high to low, sequentially switch on the power output end which corresponds to the rechargeable battery with the maximum voltage value among the rechargeable batteries, and power off the other power output ends, so as to control the charging unit to sequentially charge the rechargeable batteries to a second preset value.

Further, the control unit controls the plurality of power output ends to be switched on with the charging unit one by one through the switch unit, so as to make the voltage collection unit detect battery voltages of the plurality of rechargeable batteries one by one, and the control unit further controls the power output end, which corresponds to the rechargeable battery with the maximum voltage value among the plurality of battery voltages detected, to be switched on and the other power output ends to be powered off, to cause the charging unit to sequentially charge the rechargeable battery with the maximum battery voltage value to the second preset value.

Further, the control unit controls the corresponding power output end to be powered off when a charging voltage of the rechargeable battery reaches the second preset value.

A charging device, comprising a housing and a charging control circuit mounted in the housing, wherein the charging control circuit includes:
a charging unit;
a plurality of power output ends, respectively used to connect with a plurality of rechargeable batteries to be charged, and charge the plurality of rechargeable batteries;
a switch unit, wherein the switch unit is connected between the charging unit and the plurality of power output ends;
a control unit electrically connected with the switch unit; and
a mode switching unit electrically connected with the control unit;
wherein the control unit switches to a first charging mode or a second charging mode in accordance with a switching signal sent by the mode switching unit, and outputs a corresponding switch signal to the switch unit; and the switch unit switches on or switches off electrical connections between the charging unit and the plurality of power output ends in accordance with the switch signal.

Further, the switch unit is a relay switch;
or
a MOS transistor, wherein a source of the MOS transistor is electrically connected with the charging unit, a drain of the MOS transistor is electrically connected with the corresponding power output end, and a gate of the MOS transistor is electrically connected with the control unit;
or
the switch unit is a NPN type triode, a collector is electrically connected with the charging unit, an emitter is electrically connected with the corresponding power output end, and a base is electrically connected with the control unit.

Further, the control unit is one of a Field-Programmable Gate Array (FPGA), a Micro-Controller Unit (MCU) with a control program embedded therein or a single chip computer.

Further, the switching signal output by the mode switching unit is implemented by means of hardware or software.

Further, the mode switching unit includes a button, to output the switching signal by operating the button;
or
the mode switching unit includes an automatic switching circuit, the automatic switching circuit being used to automatically output the switching signal after detecting a preset trigger condition.

Further, the charging control circuit further includes a voltage collection unit, the voltage collection unit being connected between the charging unit and the switch unit, and connected to the control unit; the voltage collection unit is used to collect voltage values of the rechargeable batteries, and the control unit, in accordance with the voltage values collected by the voltage collection unit, controls switch-on or switch-off of electrical connections between the plurality of power output ends and the charging unit through the switch unit.

Further, the control unit controls the plurality of power output ends to be switched on with the charging unit one by one through the switch unit, to control the voltage collection unit to collect a battery voltage of each rechargeable battery.

Further, when the control unit switches to the first charging mode, the control unit controls the switch unit to, in accordance with an order of battery voltages from high to low, sequentially switch on the power output end which corresponds to the rechargeable battery with the maximum voltage value among the plurality of rechargeable batteries, and power off the other power output ends, so as to control the charging unit to sequentially charge the plurality of rechargeable batteries to a first preset value, and then switch on all the plurality of power output ends, to cause the charging unit to charge all the rechargeable batteries once again and charge the rechargeable batteries to a second preset value.

Further, the control unit controls the plurality of power output ends to be switched on with the charging unit one by one through the switch unit, so as to make the voltage collection unit detect battery voltages of the plurality of rechargeable batteries one by one, and the control unit further controls the power output end, which corresponds to the rechargeable battery with the maximum voltage value in the battery voltages detected, to be switched on and the other power output ends to be powered off, to cause the charging unit to charge the rechargeable battery with the maximum battery voltage value to the first preset value.

Further, when the control unit switches to the second charging mode, the control unit controls the switch unit to, in accordance with an order of battery voltages of the rechargeable batteries from high to low, sequentially switch on the power output end which corresponds to the rechargeable battery with the maximum voltage value among the rechargeable batteries, and power off the other power output ends, so as to control the charging unit to sequentially charge the rechargeable batteries to a second preset value.

Further, the control unit controls the plurality of power output ends to be switched on with the charging unit one by one through the switch unit, so as to make the voltage collection unit detect battery voltages of the plurality of rechargeable batteries one by one, and the control unit further controls the power output end, which corresponds to the rechargeable battery with the maximum voltage value among the plurality of battery voltages detected, to be switched on and the other power output ends to be powered off, to cause the charging unit to sequentially charge the rechargeable battery with the maximum battery voltage value to the second preset value.

Further, the control unit controls the corresponding power output end to be powered off when a charging voltage of the rechargeable battery reaches the second preset value.

A charging system, including a plurality of rechargeable batteries and a charging control circuit used to charge the plurality of rechargeable batteries, wherein the charging control circuit includes:
a charging unit;
a plurality of power output ends, respectively used to connect with the plurality of rechargeable batteries and charge the plurality of rechargeable batteries;
a switch unit, wherein the switch unit is connected between the charging unit and the plurality of power output ends;
a control unit electrically connected with the switch unit; and
a mode switching unit electrically connected with the control unit;
wherein the control unit switches to a first charging mode or a second charging mode in accordance with a switching signal sent by the mode switching unit, and outputs a corresponding switch signal to the switch unit; and the switch unit switches on or switches off electrical connections between the charging unit and the plurality of power output ends in accordance with the switch signal.

Further, the switch unit is a relay switch;
or
a MOS transistor, wherein a source of the MOS transistor is electrically connected with the charging unit, a drain of the MOS transistor is electrically connected with the corresponding power output end, and a gate of the MOS transistor is electrically connected with the control unit;
or
the switch unit is a NPN type triode, a collector is electrically connected with the charging unit, an emitter is electrically connected with the corresponding power output end, and a base is electrically connected with the control unit.

Further, the control unit is one of a Field-Programmable Gate Array (FPGA), a Micro-Controller Unit (MCU) with a control program embedded therein or a single chip computer.

Further, the switching signal output by the mode switching unit is implemented by means of hardware or software.

Further, the mode switching unit includes a button, to output the switching signal by operating the button;
or
the mode switching unit includes an automatic switching circuit, the automatic switching circuit being used to automatically output the switching signal after detecting a preset trigger condition.

Further, the charging control circuit further includes a voltage collection unit, the voltage collection unit being connected between the charging unit and the switch unit, and connected to the control unit; the voltage collection unit is used to collect voltage values of the rechargeable batteries, and the control unit, in accordance with the voltage values collected by the voltage collection unit, controls switch-on or switch-off of electrical connections between the plurality of power output ends and the charging unit through the switch unit.

Further, the control unit controls the plurality of power output ends to be switched on with the charging unit one by one through the switch unit, to control the voltage collection unit to collect a battery voltage of each rechargeable battery.

Further, when the control unit switches to the first charging mode, the control unit controls the switch unit to, in accordance with an order of battery voltages from high to low, sequentially switch on the power output end which corresponds to the rechargeable battery with the maximum voltage value among the plurality of rechargeable batteries, and power off the other power output ends, so as to control the charging unit to sequentially charge the plurality of rechargeable batteries to a first preset value, and then switch on all the plurality of power output ends, to cause the charging unit to charge all the rechargeable batteries once again and charge the rechargeable batteries to a second preset value.

Further, the control unit controls the plurality of power output ends to be switched on with the charging unit one by one through the switch unit, so as to make the voltage collection unit detect battery voltages of the plurality of rechargeable batteries one by one, and the control unit further controls the power output end, which corresponds to the rechargeable battery with the maximum voltage value in the battery voltages detected, to be switched on and the other power output ends to be powered off, to cause the charging unit to charge the rechargeable battery with the maximum battery voltage value to the first preset value.

Further, when the control unit switches to the second charging mode, the control unit controls the switch unit to, in accordance with an order of battery voltages of the rechargeable batteries from high to low, sequentially switch on the power output end which corresponds to the rechargeable battery with the maximum voltage value among the rechargeable batteries, and power off the other power output ends, so as to control the charging unit to sequentially charge the rechargeable batteries to a second preset value.

Further, the control unit controls the plurality of power output ends to be switched on with the charging unit one by one through the switch unit, so as to make the voltage collection unit detect battery voltages of the plurality of rechargeable batteries one by one, and the control unit further controls the power output end, which corresponds to the rechargeable battery with the maximum voltage value among the plurality of battery voltages detected, to be switched on and the other power output ends to be powered off, to cause the charging unit to sequentially charge the rechargeable battery with the maximum battery voltage value to the second preset value.

Further, the control unit controls the corresponding power output end to be powered off when a charging voltage of the rechargeable battery reaches the second preset value.

A charging control method, including:
acquiring a switching signal;
switching to a first charging mode or a second charging mode in accordance with the switching signal, and outputting a corresponding switch signal; and
switching on or switching off electrical connections between a charging unit and a plurality of power output ends in accordance with the switch signal, wherein the plurality of power output ends are used to connect with a plurality of rechargeable batteries respectively, and the charging unit charges the plurality of rechargeable batteries through the plurality of power output ends.

Further, the switching signal is triggered by operating a button;
or
the switching signal is automatically triggered after a preset trigger condition is detected.

Further, the step of switching to a first charging mode in accordance with the switching signal comprises:
sequentially charging the plurality of rechargeable batteries to a first preset value in accordance with an order of battery voltages of the rechargeable batteries from high to low; and
controlling the charging unit to charge all the rechargeable batteries once again and charge the rechargeable batteries to a second preset value.

Further, the step of sequentially charging the plurality of rechargeable batteries to a first preset value in accordance with an order of battery voltages of the rechargeable batteries from high to low includes:
(a) switching on the electrical connections between the charging unit and the plurality of power out ends one by one;
(b) detecting the battery voltages of the plurality of rechargeable batteries one by one;
(c) controlling the charging unit to charge the rechargeable battery with the maximum battery voltage value to the first preset value; and
repeating (a)-(c), to sequentially charge the remaining rechargeable batteries to the first preset value in accordance with an order of battery voltages from high to low.

Further, the step of switching to a second charging mode in accordance with the switching signal includes:
(d) switching on the electrical connections between the charging unit and the plurality of power out ends one by one;
(e) detecting the battery voltages of the plurality of rechargeable batteries one by one;
(f) controlling the charging unit to first charge the rechargeable battery with the maximum voltage value, and then directly charge the rechargeable battery to a second preset value; and
repeating (d)-(f), to sequentially charge the remaining rechargeable batteries to the second preset value in accordance with an order of battery voltages from high to low.

A charging control circuit, including:
a charging unit;
a plurality of power output ends, respectively used to connect with a plurality of rechargeable batteries and charge the plurality of rechargeable batteries;
a switch unit, wherein the switch unit is connected between the charging unit and the plurality of power output ends; and
a control unit electrically connected with the switch unit;
wherein the control unit controls switch-on and switch-off of electrical connections between the charging unit and the plurality of power output ends through the switch unit, to cause the charging unit to sequentially charge the plurality of rechargeable batteries to a first preset value in accordance with an order of battery voltages of the rechargeable batteries from high to low, then charge all the rechargeable batteries once again, and charge the rechargeable batteries to a second preset value.

Further, the switch unit is a relay switch;
or
a MOS transistor, wherein a source of the MOS transistor is electrically connected with the charging unit, a drain of the MOS transistor is electrically connected with the corresponding power output end, and a gate of the MOS transistor is electrically connected with the control unit;
or
the switch unit is a NPN type triode, a collector is electrically connected with the charging unit, an emitter is electrically connected with the corresponding power output end, and a base is electrically connected with the control unit.

Further, the control unit is one of a Field-Programmable Gate Array (FPGA), a Micro-Controller Unit (MCU) with a control program embedded therein or a single chip computer.

Further, the charging control circuit further includes a voltage collection unit, the voltage collection unit being connected between the charging unit and the switch unit and connected to the control unit; the voltage collection unit is used to collect voltage values of the rechargeable batteries, and the control unit, in accordance with the voltage values collected by the voltage collection unit, controls switch-on or switch-off of electrical connections between the plurality of power output ends and the charging unit through the switch unit.

Further, the control unit controls the plurality of power output ends to be switched on with the charging unit one by one through the switch unit, to control the voltage collection unit to collect a battery voltage of each rechargeable battery.

Further, the charging unit sequentially charges the plurality of rechargeable batteries to the first preset value by means of constant current charging.

Further, the charging unit charges the plurality of rechargeable batteries from the first preset value to the second preset value by means of constant voltage charging.

Further, the control unit controls the corresponding power output ends to be powered off when charging voltages of the rechargeable batteries reach the second preset value.

A charging device, comprising a housing and a charging control circuit mounted in the housing, wherein the charging control circuit comprises:
a charging unit;
a plurality of power output ends, respectively used to connect with a plurality of rechargeable batteries and charge the plurality of rechargeable batteries;
a switch unit, wherein the switch unit is connected between the charging unit and the plurality of power output ends; and
a control unit electrically connected with the switch unit;
wherein the control unit controls switch-on and switch-off of electrical connections between the charging unit and the plurality of power output ends through the switch unit, to cause the charging unit to sequentially charge the plurality of rechargeable batteries to a first preset value in accordance with an order of battery voltages of the rechargeable batteries from high to low, then charge all the rechargeable batteries once again, and charge the rechargeable batteries to a second preset value.

Further, the switch unit is a relay switch;
or
a MOS transistor, wherein a source of the MOS transistor is electrically connected with the charging unit, a drain of the MOS transistor is electrically connected with the corresponding power output end, and a gate of the MOS transistor is electrically connected with the control unit;
or
the switch unit is a NPN type triode, a collector is electrically connected with the charging unit, an emitter is electrically connected with the corresponding power output end, and a base is electrically connected with the control unit.

Further, the control unit is one of a Field-Programmable Gate Array (FPGA), a Micro-Controller Unit (MCU) with a control program embedded therein or a single chip computer.

Further, the charging device further includes a voltage collection unit, the voltage collection unit being connected between the charging unit and the switch unit and connected to the control unit; the voltage collection unit is used to collect voltage values of the rechargeable batteries, and the control unit, in accordance with the voltage values collected by the voltage collection unit, controls switch-on or switch-off of electrical connection between the plurality of power output ends and the charging unit through the switch unit.

Further, the control unit controls the plurality of power output ends to be switched on with the charging unit one by one through the switch unit, to control the voltage collection unit to collect a battery voltage of each rechargeable battery.

Further, the charging unit sequentially charges the plurality of rechargeable batteries to the first preset value by means of constant current charging.

Further, the charging unit charges the plurality of rechargeable batteries from the first preset value to the second preset value by means of constant voltage charging.

Further, the control unit controls the corresponding power output ends to be powered off when charging voltages of the rechargeable batteries reach the second preset value.

A charging system, wherein the charging system includes a plurality of rechargeable batteries and a charging control circuit used to charge the plurality of rechargeable batteries, wherein the charging control circuit includes:
a charging unit;
a plurality of power output ends, respectively used to connect with a plurality of rechargeable batteries and charge the plurality of rechargeable batteries;
a switch unit, wherein the switch unit is connected between the charging unit and the plurality of power output ends; and
a control unit electrically connected with the switch unit;
wherein the control unit controls switch-on and switch-off of electrical connections between the charging unit and the plurality of power output ends through the switch unit, to cause the charging unit to sequentially charge the plurality of rechargeable batteries to a first preset value in accordance with an order of battery voltages of the rechargeable batteries from high to low, then charge all the rechargeable batteries once again, and charge the rechargeable batteries to a second preset value.

Further, the switch unit is a relay switch;
or
a MOS transistor, wherein a source of the MOS transistor is electrically connected with the charging unit, a drain of the MOS transistor is electrically connected with the corresponding power output end, and a gate of the MOS transistor is electrically connected with the control unit;
or
the switch unit is a NPN type triode, a collector is electrically connected with the charging unit, an emitter is electrically connected with the corresponding power output end, and a base is electrically connected with the control unit.

Further, the control unit is one of a Field-Programmable Gate Array (FPGA), a Micro-Controller Unit (MCU) with a control program embedded therein or a single chip computer.

Further, the charging system further includes a voltage collection unit, the voltage collection unit being connected between the charging unit and the switch unit and connected to the control unit; the voltage collection unit is used to collect voltage values of the rechargeable batteries, and the control unit, in accordance with the voltage values collected by the voltage collection unit, controls switch-on or switch-off of the switch unit.

Further, the control unit controls the plurality of power output ends to be switched on with the charging unit one by one through the switch unit, to control the voltage collection unit to collect a battery voltage of each rechargeable battery.

Further, the charging unit sequentially charges the plurality of rechargeable batteries to the first preset value by means of constant current charging.

Further, the charging unit charges the plurality of rechargeable batteries from the first preset value to the second preset value by means of constant voltage charging.

Further, the control unit controls the corresponding power output ends to be powered off when charging voltages of the rechargeable batteries reach the second preset value.

A charging control method, including:
sequentially charging a plurality of rechargeable batteries to a first preset value in accordance with an order of battery voltages of the rechargeable batteries from high to low; and
controlling a charging unit to charge all the rechargeable batteries once again and charge the rechargeable batteries to a second preset value.

Further, the plurality of rechargeable batteries are sequentially charged to the first preset value by means of constant current charging.

Further, the plurality of rechargeable batteries are charged from the first preset value to the second preset value by means of constant voltage charging.

Further, when charging voltages of the rechargeable batteries reach the second preset value, corresponding power output ends are controlled to be powered off.

According to the aforementioned charging control circuits, charging devices, charging systems and charging control methods, a plurality of rechargeable batteries are charged by using two charging modes, and the two charging modes can be switched in accordance with user demands, that is, when it is necessary to prevent high voltage batteries from high current discharge to low voltage batteries so as to effectively protect the rechargeable batteries, it is possible to switch to the first charging mode; moreover, when it is necessary to fully charge one rechargeable battery within the shortest time so as to meet users' need, it is possible to switch to the second charging mode, which makes the charging control circuits more practical.

### BRIEF DESCRIPTION OF THE DRAWINGS

Fig. 1 is one functional module diagram of a charging control circuit according to an embodiment of the present disclosure.
Fig. 2 is a schematic flow chart of a charging control method according to an embodiment of the present disclosure.
Fig. 3 is a schematic flow chart illustrating the charging control circuit shown in Fig. 1 switching to a first charging mode.
Fig. 4 is a schematic flow chart illustrating the charging control circuit shown in Fig. 1 switching to a second charging mode.
Fig. 5 is another functional module diagram of a charging control circuit according to an embodiment of the present disclosure.
Fig. 6 is one schematic application diagram of a charging control circuit according to an embodiment of the present disclosure.
Fig. 7 is another schematic application diagram of a charging control circuit according to an embodiment of the present disclosure.

### Description of main reference numerals

| | |
|---|---|
| Charging control circuit | 100 |
| Power output end | 10 |
| Charging unit | 20 |
| Control unit | 30 |
| Switch unit | 40 |
| Voltage collection unit | 50 |
| Mode switching unit | 70 |
| Rechargeable battery | 200 |
| Movable device | 300 |
| Power device | 301 |
| Electronic Speed Control (ESC) | 303 |
| Motor | 305 |
| Propeller | 307 |

### DETAILED DESCRIPTION OF THE EMBODIMENTS

The embodiments of the present disclosure will be clearly described below with reference to the accompanying drawings in the embodiments of the present disclosure. Apparently, the described embodiments are merely some of the embodiments of the present disclosure rather than all of the embodiments. All other embodiments obtained by a person of ordinary skill in the art based on the embodiments of the present disclosure without creative efforts shall fall within the protection scope of the present disclosure.

It should be noted that when one element is referred to as "electrically connect" another element, it may be directly on another assembly or it is also possible that there is an element between them. When one element is considered to "electrically connect" another element, it may be a contact connection, for example, it may be a wire connection manner, and it may also be a non-contact connection, for example, it may be a non-contact coupling manner.

Unless otherwise defined, all the technical and scientific terms used herein are the same as the meanings generally understood by persons skilled in the technical field of the present disclosure. Herein, the terms used in the specification of the present disclosure are intended to describe specific embodiments, instead of limiting the present disclosure. The term "and/or" used herein includes any combination and all combinations of one or more related items listed.

Some implementation manners of the present disclosure are described below in detail with reference to the accompanying drawings. In the event of no conflict, embodiments described below and features in the embodiments can be combined with each other.

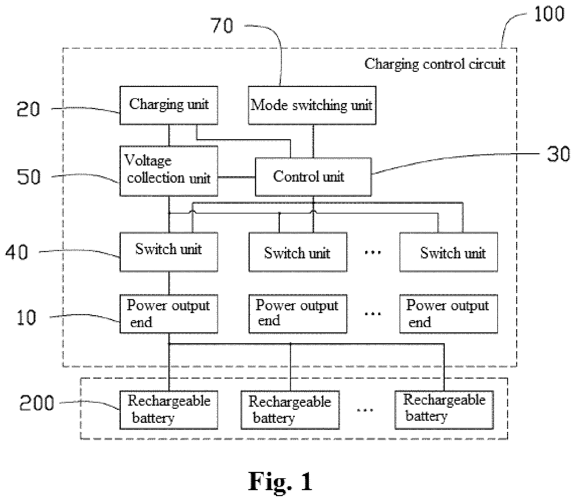

Referring to Fig. 1, an embodiment of the present disclosure provides a charging control circuit 100, used to charge a plurality of rechargeable batteries 200. The charging control circuit 100 includes a plurality of power output ends 10, a charging unit 20, a control unit 30, a plurality of switch units 40 corresponding to the power output ends 10 in a one to one manner and a voltage collection unit 50.

The plurality of power output ends 10 are connected in parallel with each other and each power output end 10 is electrically connected with the charging unit 20, and one of the switch units 40 is further connected between each power output end 10 and the charging unit 20.

The charging unit 20 may include a power input end, an AC/DC conversion circuit and/or a DC conversion circuit and other circuit modules, used to be electrically connected to an external power supply, and process the external power supply into a corresponding charging voltage which is then output to the power output end 10.

The control unit 30 may be a Field-Programmable Gate Array (FPGA), a Micro-Controller Unit (MCU) with a control program embedded therein or a single chip computer or the like. The control unit 30 may be electrically connected with the plurality of switch units 40 through a control bus, used to output corresponding switch signals to the switch units 40. The switch units 40 receive the switch signals sent by the control unit 30, and switch on or switch off electrical connections between the charging unit 20 and the corresponding power output ends 10 in accordance with the switch signals, to cause the charging unit 20 to charge the rechargeable batteries 200 electrically connected to the power output ends 10 through the switch units 40 switched on and the corresponding power output ends 10.

The switch unit 40 may be a Metal Oxide Semiconductor Field Effect Transistors (MOS transistors), or a relay or other electronic switches. In this implementation manner, the operation manner of the switch unit 40 is described by taking that the switch unit 40 is a MOS transistor as an example, a source of the MOS transistor is connected with the charging unit 20, a drain of the MOS transistor is connected with the corresponding power output end 10, and a gate of the MOS transistor is connected with the control unit 30 through the control bus. The control unit 30 sends a corresponding switch signal to the gate of the MOS transistor, for example, a high level signal or a low level signal, so as to control switch-on or switch-off of the MOS transistor. When the MOS transistor is switched on, the charging unit 20 may charge the rechargeable batteries 200 through the MOS transistor switched on and the corresponding power output end 10.

It can be understood that, in other implementation manners, the switch unit 40 may also be a NPN type triode or other electronic switches. For example, when the switch unit 40 is a NPN type triode, a base of the NPN type triode is connected with the charging unit 30 through the control bus, a collector is electrically connected with the charging unit 20, and an emitter is electrically connected with the corresponding power output end 10.

The voltage collection unit 50 is electrically connected between the charging unit 20 and the switch unit 40 and electrically connected to the control unit 30. The voltage collection unit 50 is used to collect a voltage of each rechargeable battery 200, and transmit the collected voltage of each rechargeable battery 200 to the control unit 30.

Further, when the plurality of switch units 40 are all switched off to switch off electrical connections between the charging unit 20 and the plurality of power output ends 10, the voltage collected by the voltage collection unit 50 is an output voltage of the charging unit 20. When one switch unit 40 in the plurality of switch units 40 is switched on while the other switch units 40 are all switched off, the voltage collected by the voltage collection unit 50 is a battery voltage of the rechargeable battery 200 connected to the power output end 10 which corresponds to the switch unit 40 in an on state. In this way, the control unit 30 controls the switch units 40 to be switched on one by one, to control the voltage collection unit 50 to detect battery voltages of the rechargeable batteries 200 connected to the plurality of power output ends 10 respectively. The control unit 30 further controls switch-on and switch-off of the switch units 40 in accordance with the voltages collected by the voltage collection unit 50, so as to switch on or switch off the electrical connections between the charging unit 20 and the corresponding power output ends 10.

It can be understood that the charging control circuit 100 may further include a mode switching unit 70. The mode switching unit 70 is electrically connected with the control unit 30.

The mode switching unit 70 is used to output a switching signal, for example, a high level signal or a low level signal, to control the charging control circuit 100 to switch between a first charging mode and a second charging mode. For example, when the control unit 30 receives the high level signal sent by the mode switching unit 70, the control unit 30 operates in the first charging mode. When the control unit 30 receives the low level signal sent by the mode switching unit 70, the control unit 30 switches to the second charging mode.

It can be understood that the switching signal output by the mode switching unit 70 may be implemented by means of hardware or software. For example, the mode switching unit 70 includes a button. In this way, when the button is pressed down, the mode switching unit 70 outputs a high level signal to the control unit 30, to control the control unit 30 to switch to the first charging mode. When the button is not pressed down, the mode switching unit 70 outputs a low level signal, to control the control unit 30 to switch to the second charging mode. Certainly, in other implementation manners, the mode switching unit 70 may also include an automatic switching circuit, the automatic switching circuit being used to automatically output a corresponding high level signal and a low level signal after detecting a preset trigger condition, to switch an operation mode of the charging control circuit 100.

It should be noted that relationships between the high and low level signals output by the mode switching unit 70 and the corresponding charging modes may be adjusted in accordance with needs. For example, in other embodiments, it is possible to set that, when the mode switching unit 70 outputs a high level signal, the control unit 30 switches to the second charging mode, and when the mode switching unit 70 outputs a low level signal, the control unit 30 switches to the first charging mode. Certainly, in other embodiments, the charging control circuit 100 may also be set as that, when the mode switching unit 70 does not output any switching signal to the control unit 30, the charging control circuit 100 maintains the existing charging mode, for example, the first charging mode or the second charging mode, however, once the control unit 30 receives a switching signal output by the mode switching unit 70, switching between charging modes is performed, for example, switching from the first charging mode to the second charging mode or switching from the second charging mode to the first charging mode.

Further, when the charging control circuit 100 operates in the first charging mode, the control unit 30 controls the switch units 40 to be switched on one by one, that is, controls the plurality of power output ends 10 to be switched on with the charging unit 20 one by one, so that the voltage collection unit 50 can detect battery voltages of the rechargeable batteries 200 connected onto the plurality of power output ends 10 one by one. The control unit 30 further controls the switch unit 40, which corresponds to the rechargeable battery 200 with the maximum voltage value in the battery voltages detected, to be switched on and the other switch units 40 to be powered off, to control the power output end 10, which corresponds to the rechargeable battery 200 with the maximum voltage value in the battery voltages detected, to be switched on and the other power output ends 10 to be powered off, so as to cause the charging unit 20 to first charge the rechargeable battery 200 with the maximum battery voltage value. When the rechargeable battery 200 with the maximum voltage value is charged to a first preset value, the voltage collection unit 50 detects battery voltages of the remaining rechargeable batteries 200 one by one. The control unit 30 further controls the switch unit 40, which corresponds to the rechargeable battery 200 with the maximum voltage value in the remaining rechargeable batteries 200, to be switched on and the other switch units 40 to be switched off, so as to cause the charging unit 20 to charge the rechargeable battery 200 with the maximum voltage value in the remaining rechargeable batteries 200 and charge the rechargeable battery 200 to the first preset value. The rest may be deduced by analogy; the control unit 30 controls the charging unit 20 to, in accordance with an order of the battery voltages of the rechargeable batteries 200 from high to low, sequentially charge the plurality of rechargeable batteries 200 all to the first preset value. Next, the control unit 30 controls the plurality of switch units 40 to be all switched on, to cause the charging unit 20 to charge all the rechargeable batteries 200 once again and charge the rechargeable batteries 200 to a second preset value.

In the aforementioned first charging mode, the charging control circuit 100 first charges all the rechargeable batteries 200 to the first preset value respectively in accordance with an order of the battery voltages from high to low, and then charges all the rechargeable batteries 200 at the same time, that is, performs parallel charging. The plurality of rechargeable batteries 200 are charged at the same time, battery voltage values of the rechargeable batteries 200 are kept consistent, that is, all are the first preset value, therefore, high current discharge from high voltage batteries to low voltage batteries may be avoided, which can achieve an aim of effectively protecting the rechargeable batteries 200, and also shorten charging time of the whole system. It can be understood that, in the first charging mode, the charging unit 20 can sequentially charge the plurality of rechargeable batteries 200 to the first preset value by means of constant current charging, and then sequentially charge the plurality of rechargeable batteries 200 from the first preset value to the second preset value by means of constant voltage charging.

When the charging control circuit 100 operates in the second charging mode, the control unit 30 controls the switch units 40 to be switched on one by one, that is, controls the plurality of power output ends 10 to be switched on with the charging unit 20 one by one, so that the voltage collection unit 50 can detect battery voltages of the rechargeable batteries 200 connected onto the plurality of power output ends 10 one by one. The control unit 30 further controls the switch unit 40, which corresponds to the rechargeable battery 200 with the maximum voltage value in the battery voltages detected, to be switched on and the other switch units 40 to be switched off, to control the power output end 10, which corresponds to the rechargeable battery 200 with the maximum voltage value in the battery voltages detected, to be switched on and the other power output ends 10 to be powered off, so as to cause the charging unit 20 to first charge the rechargeable battery 200 with the maximum voltage value and directly charge the rechargeable battery 200 to the second preset value. After the rechargeable battery 200 with the maximum battery voltage value is fully charged, the voltage collection unit 50 detects battery voltages of the remaining rechargeable batteries 200 one by one. The control unit 30 further controls the switch unit 40, which corresponds to the rechargeable battery 200 with the maximum voltage value in the remaining rechargeable batteries 200, to be switched on and the other switch units 40 to be switched off, so as to cause the charging unit 20 to charge the rechargeable battery 200 with the maximum battery voltage value in the remaining rechargeable batteries 200 and directly charge the rechargeable battery 200 to the second preset value. The rest may be deduced by analogy; the control unit 30 sequentially charges the plurality of rechargeable batteries 200 by detecting battery voltages of the plurality of rechargeable batteries 200 and in accordance with an order of the battery voltages from high to low.

In the aforementioned second charging mode, the charging control circuit 100 may charge the rechargeable battery 200 with the maximum voltage value, and thus one rechargeable battery 200 can be fully charged within the shortest time, to meet use by a user.

In this embodiment, the first preset value is less than the second preset value, and the second preset value may be a rated output voltage value of the rechargeable battery 200 or a voltage value slightly greater than a rated output voltage of the rechargeable battery 200, for example, it may be 1.2 times the rated output voltage value of the rechargeable battery 200.

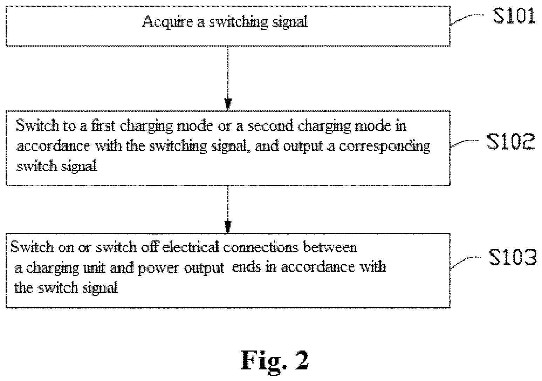

Referring to Fig. 2, a charging control method of the charging control circuit 100 provided in an implementation manner of the present disclosure includes the following steps:
S101: A switching signal is acquired.
S102: Switching is performed to a first charging mode or a second charging mode in accordance with the switching signal, and a corresponding switch signal is output.

For example, in the aforementioned battery embodiment, the control unit 30 in the charging control circuit 100 is electrically connected to the mode switching unit 70. The mode switching unit 70 is used to output the switching signal, for example, a high level signal or a low level signal, to control the charging control circuit 100 to switch between a first charging mode and a second charging mode. For example, when the control unit 30 receives the high level signal sent by the mode switching unit 70, the control unit 30 operates in the first charging mode. When the control unit 30 receives the low level signal sent by the mode switching unit 70, the control unit 30 switches to the second charging mode.

It can be understood that the switching signal output by the mode switching unit 70 may be implemented by means of hardware or software. For example, the mode switching unit 70 includes a button. In this way, when the button is pressed down, the control unit 30 may receive a high level signal sent by the mode switching unit 70, and the control unit 30 switches to the first charging mode. When the button is not pressed down, the control unit 30 receives a low level signal sent by the mode switching unit 70, and the control unit 30 switches to the second charging mode. Certainly, in other implementation manners, the mode switching unit 70 may also include an automatic switching circuit, the automatic switching circuit being used to automatically output a corresponding high level signal and a low level signal after detecting a preset trigger condition, to switch an operation mode of the charging control circuit 100.

S103: Electrical connections between the charging unit 20 and the power output ends 10 are switched on or switched off in accordance with the switch signal.

For example, in the aforementioned battery embodiment, the charging control circuit 100 further includes switch units 40, the switch units 40 being electrically connected between the charging unit 20 and the corresponding power output ends 10, and by switching on or switching off the switch units 40, electrical connections between the charging unit 20 and the power output ends 10 are switched on or switched off.

It can be understood that the charging control circuit 100 may further include a voltage collection unit 50, and the control unit 30 controls the switch units 40 to be switched on one by one, that is, controls the plurality of power output ends 10 to be switched on with the charging unit 20 one by one, to control the voltage collection unit 50 to acquire a battery voltage of each rechargeable battery 200 and control switch-on or switch-off of the switch units 40 in accordance with the collected voltage values.

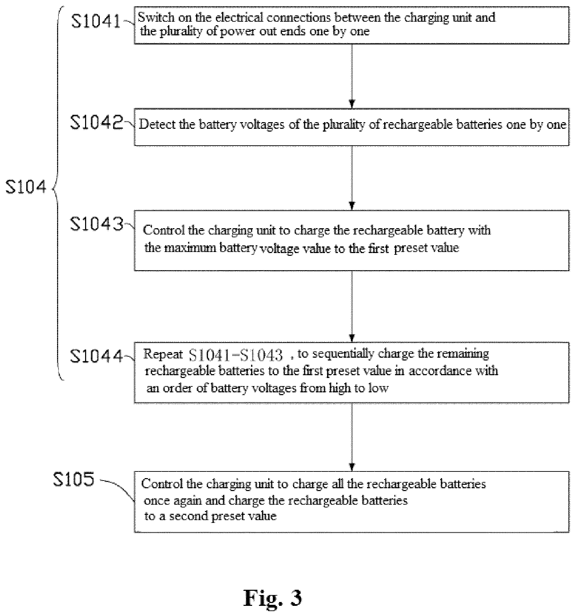

Referring to Fig. 3, when switching is performed to switch to the first charging mode in accordance with the switching signal, the S102 includes:

S104: The rechargeable batteries 200 are sequentially charged to a first preset value in accordance with an order of battery voltages of the rechargeable batteries 200 from high to low.

Further, S104 may include:
S1041: The switch units 40 are controlled to be switched on one by one, to switch on the electrical connections between the charging unit 20 and the plurality of power output ends 10 one by one.
S1042: Battery voltages of the plurality of rechargeable batteries 200 are detected one by one.
S1043: The charging unit 20 is controlled to charge the rechargeable battery with the maximum battery voltage value to the first preset value.
S1044: S1041-S1043 are repeated, to sequentially charge the remaining rechargeable batteries 200 to the first preset value in accordance with an order of the battery voltages from high to low.
S105: The charging unit 20 is controlled to charge all the rechargeable batteries 200 once again and charge the rechargeable batteries 200 to a second preset value.

It can be understood that, in the first charging mode, the charging unit 20 may sequentially charge the plurality of rechargeable batteries 200 to the first preset value by means of constant current charging, and then sequentially charge the plurality of rechargeable batteries 200 from the first preset value to the second preset value by means of constant voltage charging.

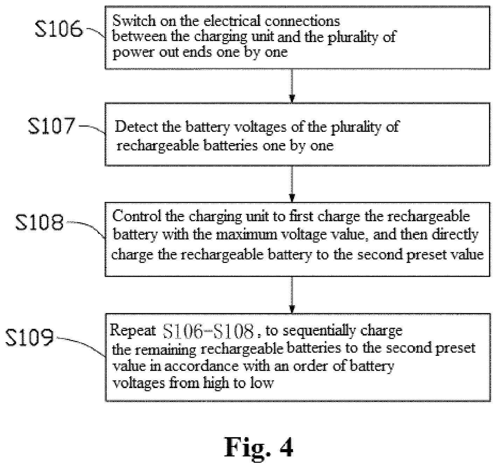

Referring to Fig. 4, when the control unit 30 switches to the second charging mode in accordance with the switching signal, the method may include:
S106: The switch units 40 are controlled to be switched on one by one, to switch on electrical connections between the charging unit 20 and the plurality of power output ends 10 one by one.
S107: Battery voltages of the plurality of rechargeable batteries 200 are detected one by one.
S108: The charging unit 20 is controlled to first charge the rechargeable battery 200 with the maximum voltage value in the battery voltages detected, and then directly charge the rechargeable battery 200 to a second preset value.
S109: S106-S108 are repeated, to sequentially charge the remaining rechargeable batteries 200 to the second preset value in accordance with an order of the battery voltages from high to low.

In this embodiment, the first preset value is less than the second preset value, and the second preset value may be a rated output voltage value of the rechargeable battery 200 or a voltage value slightly greater than a rated output voltage of the rechargeable battery 200, for example, it may be 1.2 times the rated output voltage value of the rechargeable battery 200.

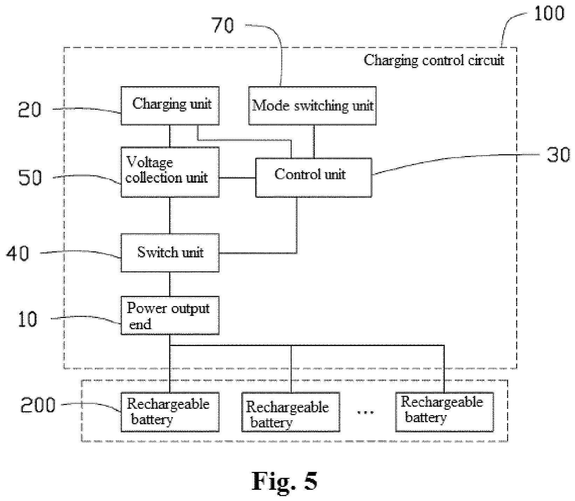

Referring to Fig. 5, in other embodiments, the switch unit 40 may also be a switch chip integrated with multiple switches, and the power output end 10 may be a parallel port. Therefore, the number of the switch units 40 and the number of the power output ends 10 both can be reduced to one, and it is only necessary to respectively connect respective ports of the power output end 10 to respective switches of the switch unit 40.

It can be understood that the aforementioned charging control circuit 100 may be mounted in a housing (not shown), and then form a charging device jointly with the housing. In addition, the charging device may form a charging system jointly with the plurality of rechargeable batteries 200.

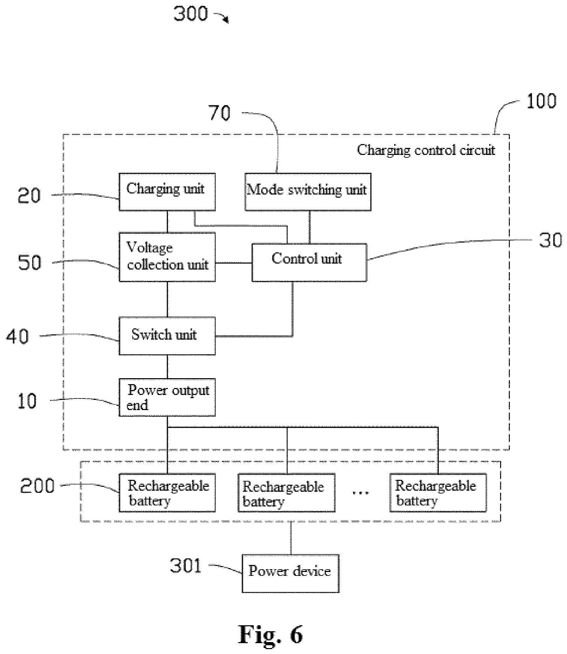

Referring to Fig. 6, it can be understood that the charging system may be applied to a movable device 300. The movable device 300 may be a vehicle, a ship or the like. The movable device 300 may further include a power device 301. The charging system may be electrically connected with the power device 301, and used to provide electric energy for the power device 301.

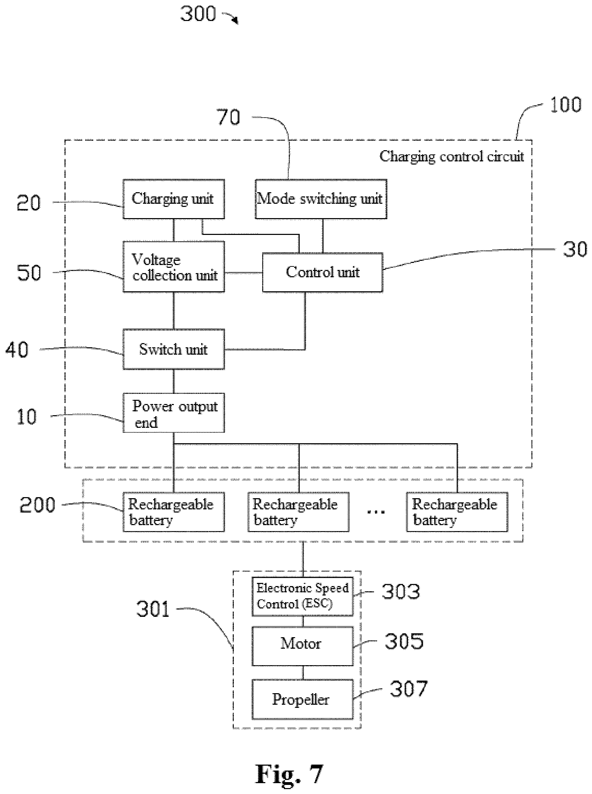

Referring to Fig. 7, in an embodiment, the movable device 300 is an unmanned aerial vehicle. The power device 301 includes an Electronic Speed Control (ESC) 303, a motor 305 and a propeller 307. The ESC 303 is electrically connected to the motor 305, and used to control a rotational speed of the motor 305. The propeller 307 is mounted on the motor 305, and used to, under the driving of the motor 305, drive the unmanned aerial vehicle 300 to fly. The charging system is electrically connected to the ESC 303, used to provide electric energy for the power device 301.

The above descriptions are some merely embodiments of the present disclosure, and are not intended to limit the patent scope of the present disclosure. Any equivalent structure or equivalent process flow modification made by using contents of the specification and the drawings of the present disclosure.

## Claims

1. A charging control circuit (100), wherein the charging control circuit (100) comprises:
a charging unit (20);
a plurality of power output ends (10), respectively configured to connect with a plurality of rechargeable batteries (200) and charge the plurality of rechargeable batteries (200);
a switch unit (40), wherein the switch unit (40) is connected between the charging unit (20) and the plurality of power output ends (10);
a control unit (30) electrically connected with the switch unit (40); and
a mode switching unit (70) electrically connected with the control unit (30),
wherein the mode switching unit (70) is configured to output a switching signal to control the charging control circuit (100) to switch between a first charging mode and
a second charging mode, and
wherein the mode switching unit (70) comprises a button, configured to cause the mode switching unit (70) to output the switching
signal as a result of a user operating the button;
wherein the control unit (30) is configured to switch to the first charging mode or the second charging mode in accordance with the switching signal sent by the mode switching unit (70), and output a corresponding switch signal to the switch unit (40); and the switch unit (40) is configured to switch on or switch off electrical connections between the charging unit (20) and the plurality of power output ends (10) in accordance with the switch signal,
wherein, when the control unit (30) switches to the first charging mode, the control unit (30) is configured to control the charging unit (20) to, in accordance with an order of battery voltages of the plurality of rechargeable batteries (200) from high to low, sequentially charge the plurality of rechargeable batteries (200) to a first preset value less than a second preset value,
and then to charge in parallel, by switching on all the plurality of power output ends (10), all the rechargeable batteries (200) of the plurality of rechargeable batteries (200) once again and to the second preset value, and
wherein, when the control unit (30) switches to the second charging mode, the control unit (30) is configured to control the charging unit (20) to, in accordance with an order of battery voltages of the plurality of rechargeable batteries (200) from high to low, sequentially charge the plurality of rechargeable batteries (200) to the second preset value,
wherein the sequentially charging in each of the first and second charging modes includes switching on the power output end (10) which corresponds to the rechargeable battery (200) to be charged, and powering off the other power output ends (10).

2. The charging control circuit (100) in claim 1, wherein the switch unit (40) is a relay switch;
or
a MOS transistor, wherein a source of the MOS transistor is electrically connected with the charging unit (20), a drain of the MOS transistor is electrically connected with a corresponding power output end (10), and a gate of the MOS transistor is electrically connected with the control unit (30);
or
the switch unit (40) is a NPN type triode, a collector is electrically connected with the charging unit (20), an emitter is electrically connected with a corresponding power output end, and a base is electrically connected with the control unit (30).

3. The charging control circuit (100) in claim 1, wherein the charging control circuit (100) further comprises a voltage collection unit (50), the voltage collection unit (50) being connected between the charging unit (20) and the switch unit (40) and connected to the control unit (30); the voltage collection unit (50) is configured to collect voltage values of the rechargeable batteries (200), and the control unit (30), in accordance with the voltage values collected by the voltage collection unit (50), is configured to control switch-on or switch-off of the electrical connections between the plurality of power output ends (10) and the charging unit (20) through the switch unit (40).

4. The charging control circuit (100) in claim 1, wherein the control unit (30) is configured to control the plurality of power output ends (10) to be switched on with the charging unit (20) one by one through the switch unit (40), to control the voltage collection unit (50) to collect a battery voltage of each rechargeable battery (200).

5. The charging control circuit (100) in claim 1, wherein, when the control unit (30) switches to the first charging mode, the control unit (30) is configured to control the switch unit (40) to, in accordance with an order of battery voltages from high to low, sequentially switch on the power output end (10) which corresponds to the rechargeable battery (200) with a maximum voltage value in the plurality of rechargeable batteries (200), and power off the other power output ends (10), so as to control the charging unit (20) to sequentially charge the plurality of rechargeable batteries (200) to the first preset value, and then to switch on all the plurality of power output ends (10), to cause the charging unit (20) to charge all the rechargeable batteries (200) once again and charge the rechargeable batteries (200) to the second preset value.

6. The charging control circuit (100) in claim 5, wherein the control unit (30) is configured to control the plurality of power output ends (10) to be switched on with the charging unit (20) one by one through the switch unit (40), so as to make the voltage collection unit (50) detect battery voltages of the plurality of rechargeable batteries (200) one by one, and the control unit (30) is further configured to control the power output end, which corresponds to the rechargeable battery with the maximum voltage value in the battery voltages detected, to be switched on and the other power output ends (10) to be powered off, to cause the charging unit (20) to charge the rechargeable battery with the maximum battery voltage value to the first preset value.

7. The charging control circuit (100) in claim 1, wherein, when the control unit (30) switches to the second charging mode, the control unit (30) is configured to control the switch unit (40) to, in accordance with an order of battery voltages of the rechargeable batteries (200) from high to low, sequentially switch on the power output end which corresponds to the rechargeable battery with a maximum voltage value in the rechargeable batteries (200), and power off the other power output ends (10), so as to control the charging unit (20) to sequentially charge the rechargeable batteries (200) to the second preset value.

8. The charging control circuit (100) in claim 7, wherein the control unit (30) is configured to control the plurality of power output ends (10) to be switched on with the charging unit (20) one by one through the switch unit (40), so as to make the voltage collection unit (50) detect battery voltages of the plurality of rechargeable batteries (200) one by one, and the control unit (30) is further configured to control the power output end (10), which corresponds to the rechargeable battery (200) with the maximum voltage value in the plurality of battery voltages detected, to be switched on and the other power output ends (10) to be powered off, to cause the charging unit (20) to sequentially charge the rechargeable battery (200) with the maximum battery voltage value to the second preset value.

9. The charging control circuit (100) in any one of claims 5 to 8, wherein the control unit (30) is configured to control a corresponding power output end (10) to be powered off when a charging voltage of a rechargeable battery (200) reaches the second preset value.

10. A charging system, wherein the charging system comprises a plurality of rechargeable batteries (200) and the charging control circuit (100) of any one of claims 1 to 9 used to charge the plurality of rechargeable batteries (200).

11. A charging control method, wherein the method comprises:
outputting a switching signal by a mode switching unit
to switch between a first charging mode and a second charging mode, wherein the switching signal is outputted as a result of a user operating a button of the mode switching unit comprised in a charging control circuit;
acquiring the switching signal;
switching to the first charging mode or the second charging mode in accordance with the switching signal, and outputting a corresponding switch signal by the charging control circuit; and
switching on or switching off electrical connections by a switch unit
between a charging unit (20) and a plurality of power output ends (10) in accordance with the switch signal, wherein the plurality of power output ends (10) are used to connect with a plurality of rechargeable batteries (200) respectively, and the charging unit (20) charges the plurality of rechargeable batteries (200) through the plurality of power output ends (10), wherein the switching to the first charging mode in accordance with the switching signal comprises:
sequentially charging the plurality of rechargeable batteries (200) to a first preset value less than a second preset value in accordance with an order of battery voltages of the rechargeable batteries (200) from high to low; and
controlling the charging unit (20) to charge in parallel, by switching on all the plurality of power output ends (10), all the rechargeable batteries (200) once again and to the second preset value,
wherein the switching to the second charging mode in accordance with the switching signal comprises:
sequentially charging the plurality of rechargeable batteries (200) to the second preset in accordance with an order of battery voltages of the plurality of rechargeable batteries (200) from high to low,
and
wherein the sequentially charging in each of the first and second charging modes includes switching on the power output end (10) which corresponds to the rechargeable battery (200) to be charged, and powering off the other power output ends (10).

12. The charging control method in claim 11, wherein the sequentially charging the plurality of rechargeable batteries (200) to a first preset value in accordance with an order of battery voltages of the rechargeable batteries (200) from high to low comprises:
(a) switching on the electrical connections between the charging unit (20) and the plurality of power out ends one by one;
(b) detecting the battery voltages of the plurality of rechargeable batteries (200) one by one;
(c) controlling the charging unit (20) to charge the rechargeable battery with the maximum battery voltage value to the first preset value; and
repeating (a)-(c), to sequentially charge the remaining rechargeable batteries (200) to the first preset value in accordance with an order of battery voltages from high to low.

13. The charging control method in claim 11, wherein the switching to a second charging mode in accordance with the switching signal comprises:
(d) switching on the electrical connections between the charging unit (20) and the plurality of power out ends one by one;
(e) detecting the battery voltages of the plurality of rechargeable batteries (200) one by one;
(f) controlling the charging unit (20) to first charge the rechargeable battery with the maximum voltage value, and then directly charge the rechargeable battery to a second preset value; and
repeating (d)-(f), to sequentially charge the remaining rechargeable batteries (200) to the second preset value in accordance with an order of battery voltages from high to low.

## Patentansprüche

1. Ladesteuerungsschaltung (100), wobei die Ladesteuerungsschaltung (100) Folgendes umfasst:
eine Ladeeinheit (20);
mehrere Leistungsausgangsenden (10), die jeweils dazu ausgestaltet sind, mit mehreren wiederaufladbaren Batterien (200) verbunden zu werden und die mehreren wiederaufladbaren Batterien (200) aufzuladen;
eine Umschalteinheit (40), wobei die Umschalteinheit (40) zwischen der Ladeeinheit (20) und den mehreren Leistungsausgangsenden (10) verbunden ist;
eine Steuereinheit (30), die elektrisch mit der Umschalteinheit (40) verbunden ist; und
eine Modusumschalteinheit (70), die elektrisch mit der Steuereinheit (30) verbunden ist,
wobei die Modusumschalteinheit (70) dazu ausgestaltet ist, ein Umschaltsignal auszugeben, um die Ladesteuerungsschaltung (100) zu steuern, zwischen einem ersten Lademodus und einem zweiten Lademodus umzuschalten, und
wobei die Modusumschalteinheit (70) einen Knopf umfasst, der dazu ausgestaltet ist, die Modusumschalteinheit (70) zu veranlassen, das Umschaltsignal als ein Resultat dessen auszugeben, dass ein Anwender den Knopf betätigt;
wobei die Steuerungseinheit (30) dazu ausgestaltet ist,
zu dem ersten Lademodus oder dem zweiten Lademodus gemäß dem Umschaltsignal umzuschalten, das von der Modusumschalteinheit (70) gesendet wird, und ein entsprechendes Umschaltsignal an die Umschalteinheit (40) auszugeben; und die Umschalteinheit (40) dazu ausgestaltet ist, elektrische Verbindungen zwischen der Ladeeinheit (20) und den mehreren Leistungsausgangsenden (10) gemäß dem Umschaltsignal einzuschalten oder auszuschalten,
wobei, wenn die Steuerungseinheit (30) zu dem ersten Lademodus umschaltet, die Steuerungseinheit (30) dazu ausgestaltet ist, die Ladeeinheit (20) zu steuern,
gemäß einer Reihung nach Batteriespannungen der mehreren wiederaufladbaren Batterien (200) von hoch zu niedrig die mehreren wiederaufladbaren Batterien (200) nacheinander auf einen ersten vorgegebenen Wert zu laden, der geringer als ein zweiter voreingegebener Wert ist,
und dann, indem all die mehreren Leistungsausgangsenden (10) eingeschaltet werden, all die wiederaufladbaren Batterien (200) der mehreren wiederaufladbaren Batterien (200) parallel noch einmal und bis zu dem zweiten voreingestellten Wert aufzuladen, und
wobei, wenn die Steuerungseinheit (30) zu dem zweiten Lademodus umschaltet, die Steuerungseinheit (30) dazu ausgestaltet ist, die Ladeeinheit (20) zu steuern,
gemäß einer Reihung nach Batteriespannungen der mehreren wiederaufladbaren Batterien (200) von hoch zu niedrig die mehreren wiederaufladbaren Batterien (200) nacheinander auf den zweiten voreingestellten Wert aufzuladen,
wobei das aufeinanderfolgende Laden in sowohl dem ersten als auch dem zweiten Lademodus umfasst, das Leistungsausgangsende (10) einzuschalten, das der aufzuladenden Batterie (200) entspricht, und die anderen Leistungsausgangsenden (10) abzuschalten.

2. Ladesteuerungsschaltung (100) nach Anspruch 1, wobei die Schalteinheit (40) ein Relaisschalter ist;
oder
ein MOS-Transistor, wobei eine Source des MOS-Transistors elektrisch mit der Ladeeinheit (20) verbunden ist, ein Drain des MOS-Transistors elektrisch mit einem entsprechenden Leistungsausgangsende (10) verbunden ist und ein Gate des MOS-Transistors elektrisch mit der Steuereinheit (30) verbunden ist;
oder
die Schalteinheit (40) eine NPN-Triode ist, ein Sammler elektrisch mit der Ladeeinheit (20) verbunden ist, ein Emitter elektrisch mit einem entsprechenden Leistungsausgangsende verbunden ist und eine Basis elektrisch mit der Steuerungseinheit (30) verbunden ist.

3. Ladesteuerungsschaltung (100) nach Anspruch 1, wobei die Ladesteuerungsschaltung (100) weiter eine Spannungssammeleinheit (50) umfasst, wobei die Spannungssammeleinheit (50) zwischen der Ladeeinheit (20) und der Umschalteinheit (40) verbunden ist und mit der Steuerungseinheit (30) verbunden ist; wobei die Spannungssammeleinheit (50) dazu ausgestaltet ist, Spannungswerte der wiederaufladbaren Batterien (200) zu sammeln, und die Steuerungseinheit (30) gemäß den von der Spannungssammeleinheit (50) gesammelten Spannungswerten dazu ausgestaltet ist, ein Einschalten oder Ausschalten der elektrischen Verbindungen zwischen den mehreren Leistungsausgangsenden (10) und der Ladeeinheit (20) durch die Umschalteinheit (40) zu steuern.

4. Ladesteuerungsschaltung (100) nach Anspruch 1, wobei die Steuerungseinheit (30) dazu ausgestaltet ist, die mehreren Leistungsausgangsenden (10) zu steuern, mit der Ladeeinheit (20) einzeln über die Umschalteinheit (40) eingeschaltet zu werden, um die Spannungssammeleinheit (50) zu steuern, eine Batteriespannung jeder wiederaufladbaren Batterie (200) zu sammeln.

5. Ladesteuerungsschaltung (100) nach Anspruch 1, wobei, wenn die Steuerungseinheit (30) zu dem ersten Lademodus umschaltet, die Steuerungseinheit (30) dazu ausgestaltet ist, die Umschalteinheit (40) zu steuern, gemäß einer Reihung von Batteriespannungen von hoch zu niedrig, nacheinander das Leistungsausgangsende (10) einzuschalten, das der wiederaufladbaren Batterie (200) mit einem maximalen Spannungswert unter den mehreren wiederaufladbaren Batterien (200) entspricht, und die anderen Leistungsausgangsenden (10) auszuschalten, um die Ladungseinheit (20) zu steuern, nacheinander die mehreren wiederaufladbaren Batterien (200) auf den ersten voreingestellten Wert aufzuladen und dann all die mehreren Leistungsausgangsenden (10) einzuschalten, um die Ladeeinheit (20) zu veranlassen, all die wiederaufladbaren Batterien (200) noch einmal aufzuladen und die wiederaufladbaren Batterien (200) auf den zweiten voreingestellten Wert aufzuladen.

6. Ladesteuerungsschaltung (100) nach Anspruch 5, wobei die Steuerungseinheit (30) dazu ausgestaltet ist, die mehreren Leistungsausgangsenden (10) zu steuern, einzeln mit der Ladeeinheit (20) durch die Umschalteinheit (40) eingeschaltet zu werden, um die Spannungssammeleinheit (50) Batteriespannungen der mehreren wiederaufladbaren Batterien (200) einzeln erfassen zu lassen, und die Steuerungseinheit (30) weiter dazu ausgestaltet ist, das Leistungsausgangsende, das der wiederaufladbaren Batterie mit dem maximalen Spannungswert unter den erfassten Batteriespannungen entspricht, zu steuern, eingeschaltet zu werden und die anderen Leistungsenden, (10) ausgeschaltet zu werden, um die Ladeeinheit (20) zu veranlassen, die wiederaufladbare Batterie mit dem maximalen Batteriespannungswert auf den ersten voreingestellten Wert aufzuladen.

7. Ladesteuerungsschaltung (100) nach Anspruch 1, wobei, wenn die Steuerungseinheit (30) zu dem zweiten Lademodus umschaltet, die Steuerungseinheit (30) dazu ausgestaltet ist, die Umschalteinheit (40) zu steuern, gemäß einer Reihung von Batteriespannungen der wiederaufladbaren Batterien (200) von hoch zu niedrig, nacheinander das Leistungsende einzuschalten, das der wiederaufladbaren Batterie mit einem maximalen Spannungswert unter den wiederaufladbaren Batterien (200) entspricht, und die anderen Leistungsenden (10) auszuschalten, um die Ladeeinheit (20) zu steuern, nacheinander die wiederaufladbaren Batterien (200) auf den zweiten voreingestellten Wert aufzuladen.

8. Ladesteuerungsschaltung (100) nach Anspruch 7, wobei die Steuerungseinheit (30) dazu ausgestaltet ist, die mehreren Leistungsausgangsenden (10) zu steuern, einzeln mit der Ladeeinheit (20) durch die Schalteinheit (40) eingeschaltet zu werden, um die Spannungssammeleinheit (50) Batteriespannungen der mehreren wiederaufladbaren Batterien (200) einzeln erfassen zu lassen, und die Steuerungseinheit (30) weiter dazu ausgestaltet ist, das Leistungsausgangsende (10), das der wiederaufladbaren Batterie (200) mit dem maximalen Spannungswert unter den mehreren erfassten Batteriespannungen entspricht, zu steuern, eingeschaltet zu werden, und die anderen Leistungsausgangsenden (10), ausgeschaltet zu werden, um die Ladeeinheit (20) zu veranlassen, nacheinander die wiederaufladbare Batterie (200) mit dem maximalen Batteriespannungswert auf den zweiten voreingestellten Wert aufzuladen.

9. Ladesteuerungsschaltung (100) nach einem der Ansprüche 5 bis 8, wobei die Steuerungseinheit (30) dazu ausgestaltet ist, ein entsprechendes Leistungsausgangsende (10) zu steuern, ausgeschaltet zu werden, wenn eine Ladespannung einer wiederaufladbaren Batterie (200) den zweiten voreingestellten Wert erreicht.

10. Ladesystem, wobei das Ladesystem mehrere wiederaufladbare Batterien (200) und die Ladesteuerungsschaltung (100) nach einem der Ansprüche 1 bis 9 zum Laden der mehreren wiederaufladbaren Batterien (200) umfasst.

11. Ladesteuerungsverfahren, wobei das Verfahren umfasst:
Ausgeben eines Umschaltsignals durch eine Modusumschalteinheit, um zwischen einem ersten Lademodus und einem zweiten Lademodus umzuschalten,
wobei das Umschaltsignal als ein Resultat dessen ausgegeben wird, dass ein Anwender einen Knopf der Modusumschalteinheit betätigt, die in einer Ladesteuerungsschaltung aufgewiesen ist;
Beziehen des Umschaltsignals;
Umschalten zu dem ersten Lademodus oder dem zweiten Lademodus gemäß dem Umschaltsignal und Ausgeben eines entsprechenden Umschaltsignals durch die Ladesteuerungsschaltung; und
Einschalten oder Ausschalten elektrischer Verbindungen durch eine Umschalteinheit zwischen einer Ladeeinheit (20) und mehreren Leistungsausgangsenden (10) gemäß dem Umschaltsignal, wobei die mehreren Leistungsausgangsenden (10) verwendet werden, um mit entsprechenden mehreren wiederaufladbaren Batterien (200) verbunden zu werden, und die Ladeeinheit (20) die mehreren wiederaufladbaren Batterien (200) durch die mehreren Leistungsausgangsenden (10) auflädt,
wobei das Umschalten zu dem ersten Lademodus gemäß dem Umschaltsignal umfasst:
Laden der mehreren wiederaufladbaren Batterien (200) gemäß einer Reihung von Batteriespannungen der wiederaufladbaren Batterien (200) von hoch zu niedrig, nacheinander auf einen ersten voreingestellten Wert, der geringer als ein zweiter voreingestellter Wert ist; und
Steuern der Ladeeinheit (20), indem all die mehreren Leistungsausgangsenden (10) eingeschaltet werden, all die wiederaufladbaren Batterien (200) parallel noch einmal und auf den zweiten voreingestellten Wert aufzuladen,
wobei das Umschalten zu dem zweiten Lademodus gemäß dem Umschaltsignal umfasst:
Laden der mehreren wiederaufladbaren Batterien (200) gemäß einer Reihung von Batteriespannungen der mehreren wiederaufladbaren Batterien (200) von hoch zu niedrig, nacheinander auf die zweite Voreinstellung,
und
wobei das Aufladen nacheinander in sowohl dem ersten als auch dem zweiten Lademodus umfasst, das Leistungsausgangsende (10) einzuschalten, das der aufzuladenden wiederaufladbaren Batterie (200) entspricht, und die anderen Leistungsausgangsenden (10) auszuschalten.

12. Ladesteuerungsverfahren nach Anspruch 11, wobei das Aufladen der mehreren wiederaufladbaren Batterien (200) gemäß einer Reihung von Batteriespannungen der wiederaufladbaren Batterien (200) von hoch zu niedrig, nacheinander auf einen ersten voreingestellten Wert umfasst:
(a) einzelnes Einschalten der elektrischen Verbindungen zwischen der Ladeeinheit (20) und der mehreren Leistungsausgangsenden:
(b) einzelnes Erfassen der Batteriespannungen der mehreren wiederaufladbaren Batterien (200);
(c) Steuern der Ladeeinheit (20), die wiederaufladbare Batterie mit dem maximalen Batteriespannungswert auf den ersten voreingestellten Wert aufzuladen; und
Wiederholen von (a)-(c), um die restlichen wiederaufladbaren Batterien (200) gemäß einer Reihung von Batteriespannungen von hoch zu niedrig, nacheinander auf einen ersten voreingestellten Wert aufzuladen.

13. Ladesteuerungsverfahren nach Anspruch 11, wobei das Umschalten zu einem zweiten Lademodus gemäß dem Umschaltsignal umfasst:
(d) einzelnes Einschalten der elektrischen Verbindungen zwischen der Ladeeinheit (20) und den mehreren Leistungsausgangsenden;
(e) einzelnes Erfassen der Batteriespannungen der mehreren wiederaufladbaren Batterien (200);
(f) Steuern der Ladeeinheit (20), zuerst die wiederaufladbare Batterie mit einem maximalen Spannungswert aufzuladen und dann direkt die wiederaufladbare Batterie auf einen zweiten voreingestellten Wert aufzuladen; und
Wiederholen von (d)-(f), um die restlichen wiederaufladbaren Batterien (200) gemäß einer Reihung von Batteriespannungen von hoch zu niedrig, nacheinander auf den zweiten voreingestellten Wert aufzuladen.

## Revendications

1. Circuit de commande de charge (100), dans lequel le circuit de commande de charge (100) comprend :
une unité de charge (20) ;
une pluralité d'extrémités de sortie de puissance (10), respectivement configurées de manière à se connecter à une pluralité de batteries rechargeables (200) et à charger la pluralité de batteries rechargeables (200) ;
une unité de commutation (40), dans laquelle l'unité de commutation (40) est connectée entre l'unité de charge (20) et la pluralité d'extrémités de sortie de puissance (10) ;
une unité de commande (30) connectée électriquement à l'unité de commutation (40) ; et
une unité de commutation de mode (70) connectée électriquement à l'unité de commande (30), dans laquelle l'unité de commutation de mode (70) est configurée de manière à fournir en sortie un signal de commutation destiné à commander au circuit de commande de charge (100) de commuter entre un premier mode de charge et un second mode de charge ; et
dans lequel l'unité de commutation de mode (70) comprend un bouton, configuré de manière à amener l'unité de commutation de mode (70) à fournir en sortie le signal de commutation en conséquence de l'actionnement du bouton par un utilisateur ;
dans lequel l'unité de commande (30) est configurée de manière à commuter sur le premier mode de charge ou le second mode de charge conformément au signal de commutation envoyé par l'unité de commutation de mode (70), et à fournir en sortie un signal de commutation correspondant à l'unité de commutation (40) ; et
dans lequel l'unité de commutation (40) est configurée de manière à activer ou à désactiver des connexions électriques entre l'unité de charge (20) et la pluralité d'extrémités de sortie de puissance (10) conformément au signal de commutation ;
dans lequel, lorsque l'unité de commande (30) commute sur le premier mode de charge, l'unité de commande (30) est configurée de manière à commander à l'unité de charge (20) de, conformément à un ordre de tensions de batterie, de la pluralité de batteries rechargeables (200), allant de tensions élevées à faibles, charger séquentiellement la pluralité de batteries rechargeables (200) à une première valeur prédéfinie inférieure à une seconde valeur prédéfinie,
et ensuite charger en parallèle, en activant toutes les extrémités de la pluralité d'extrémités de sortie de puissance (10), toutes les batteries rechargeables (200) de la pluralité de batteries rechargeables (200) une fois de plus, et à la seconde valeur prédéfinie ; et
dans lequel, lorsque l'unité de commande (30) commute sur le second mode de charge, l'unité de commande (30) est configurée de manière à commander, à l'unité de charge (20) de, conformément à un ordre de tensions de batterie, de la pluralité de batteries rechargeables (200), allant de tensions élevées à faibles, charger séquentiellement la pluralité de batteries rechargeables (200) à la seconde valeur prédéfinie ;
dans lequel l'étape de charge séquentielle, dans chacun des premier et second modes de charge, inclut l'activation de l'extrémité de sortie de puissance (10) qui correspond à la batterie rechargeable (200) à charger, et la mise hors tension des autres extrémités de sortie de puissance (10).

2. Circuit de commande de charge (100) selon la revendication 1, dans lequel l'unité de commutation (40) est un commutateur à relais ; ou
un transistor MOS, dans lequel une source du transistor MOS est connectée électriquement à l'unité de charge (20), un drain du transistor MOS est connecté électriquement à une extrémité de sortie de puissance correspondante (10), et une grille du transistor MOS est connectée électriquement à l'unité de commande (30) ; ou
l'unité de commutation (40) est une triode de type NPN, un collecteur est électriquement connecté à l'unité de charge (20), un émetteur est électriquement connecté à une extrémité de sortie de puissance correspondante, et une base est électriquement connectée à l'unité de commande (30).

3. Circuit de commande de charge (100) selon la revendication 1, dans lequel le circuit de commande de charge (100) comprend en outre une unité de collecte de tension (50), l'unité de collecte de tension (50) étant connectée entre l'unité de charge (20) et l'unité de commutation (40) et connectée à l'unité de commande (30) ; dans lequel l'unité de collecte de tension (50) est configurée de manière à collecter des valeurs de tension des batteries rechargeables (200), et l'unité de commande (30), conformément aux valeurs de tension collectées par l'unité de collecte de tension (50), est configurée de manière à commander l'activation ou la désactivation des connexions électriques entre la pluralité d'extrémités de sortie de puissance (10) et l'unité de charge (20), par l'intermédiaire de l'unité de commutation (40).

4. Circuit de commande de charge (100) selon la revendication 1, dans lequel l'unité de commande (30) est configurée de manière à commander l'activation de la pluralité d'extrémités de sortie de puissance (10) avec l'unité de charge (20), une par une, par l'intermédiaire de l'unité de commutation (40), afin de commander, à l'unité de collecte de tension (50), de collecter une tension de batterie de chaque batterie rechargeable (200).

5. Circuit de commande de charge (100) selon la revendication 1, dans lequel, lorsque l'unité de commande (30) commute sur le premier mode de charge, l'unité de commande (30) est configurée de manière à commander à l'unité de commutation (40) de, conformément à un ordre de tensions de batterie, allant de tensions élevées à faibles, activer séquentiellement l'extrémité de sortie de puissance (10) qui correspond à la batterie rechargeable (200) avec une valeur de tension maximale dans la pluralité de batteries rechargeables (200), et mettre hors tension les autres extrémités de sortie de puissance (10), de manière à commander, à l'unité de charge (20), de charger séquentiellement la pluralité de batteries rechargeables (200) à la première valeur prédéfinie, et ensuite activer toutes les extrémités de la pluralité d'extrémités de sortie de puissance (10), en vue d'amener l'unité de charge (20) à charger toutes les batteries rechargeables (200) une fois de plus et à charger les batteries rechargeables (200) à la seconde valeur prédéfinie.

6. Circuit de commande de charge (100) selon la revendication 5, dans lequel l'unité de commande (30) est configurée de manière à commander l'activation de la pluralité d'extrémités de sortie de puissance (10) avec l'unité de charge (20), une par une, par l'intermédiaire de l'unité de commutation (40), de manière à amener l'unité de collecte de tension (50) à détecter des tensions de batterie de la pluralité de batteries rechargeables (200), une par une, et l'unité de commande (30) est en outre configurée de manière à commander l'activation de l'extrémité de sortie de puissance, qui correspond à la batterie rechargeable présentant la valeur de tension maximale dans les tensions de batterie détectées, et la mise hors tension des autres extrémités de sortie de puissance (10), en vue d'amener l'unité de charge (20) à charger la batterie rechargeable, présentant la valeur de tension de batterie maximale, à la première valeur prédéfinie.

7. Circuit de commande de charge (100) selon la revendication 1, dans lequel, lorsque l'unité de commande (30) commute sur le second mode de charge, l'unité de commande (30) est configurée de manière à commander, à l'unité de commutation (40), de, conformément à un ordre de tensions de batterie, des batteries rechargeables (200), allant de tensions élevées à faibles, activer séquentiellement l'extrémité de sortie de puissance qui correspond à la batterie rechargeable présentant une valeur de tension maximale dans les batteries rechargeables (200), et mettre hors tension les autres extrémités de sortie de puissance (10), de façon à commander, à l'unité de charge (20), de charger séquentiellement les batteries rechargeables (200) à la seconde valeur prédéfinie.

8. Circuit de commande de charge (100) selon la revendication 7, dans lequel l'unité de commande (30) est configurée de manière à commander l'activation de la pluralité d'extrémités de sortie de puissance (10), avec l'unité de charge (20), une par une, par l'intermédiaire de l'unité de commutation (40), de manière à amener l'unité de collecte de tension (50) à détecter des tensions de batterie de la pluralité de batteries rechargeables (200), une par une, et l'unité de commande (30) est en outre configurée de manière à commander l'activation de l'extrémité de sortie de puissance (10), qui correspond à la batterie rechargeable (200) présentant la valeur de tension maximale dans la pluralité de tensions de batterie détectées, et la mise hors tension des autres extrémités de sortie de puissance (10), en vue d'amener l'unité de charge (20) à charger séquentiellement la batterie rechargeable (200), présentant la valeur de tension de batterie maximale, à la seconde valeur prédéfinie.

9. Circuit de commande de charge (100) selon l'une quelconque des revendications 5 à 8, dans lequel l'unité de commande (30) est configurée de manière à commander la mise hors tension d'une extrémité de sortie de puissance correspondante (10) lorsqu'une tension de charge d'une batterie rechargeable (200) atteint la seconde valeur prédéfinie.

10. Système de charge, dans lequel le système de charge comprend une pluralité de batteries rechargeables (200), et le circuit de commande de charge (100) selon l'une quelconque des revendications 1 à 9 utilisé pour charger la pluralité de batteries rechargeables (200).

11. Procédé de commande de charge, dans lequel le procédé comprend les étapes ci-dessous consistant à :
fournir en sortie un signal de commutation, par le biais d'une unité de commutation de mode, pour commuter entre un premier mode de charge et un second mode de charge, dans lequel le signal de commutation est fourni en sortie à la suite de l'actionnement, par un utilisateur, d'un bouton de l'unité de commutation de mode comprise dans un circuit de commande de charge ;
acquérir le signal de commutation ;
commuter sur le premier mode de charge ou sur le second mode de charge conformément au signal de commutation, et fournir en sortie un signal de commutation correspondant, par le biais du circuit de commande de charge ; et
activer ou désactiver des connexions électriques, par le biais d'une unité de commutation entre une unité de charge (20) et une pluralité d'extrémités de sortie de puissance (10), conformément au signal de commutation, dans lequel les extrémités de la pluralité d'extrémités de sortie de puissance (10) sont utilisées pour se connecter à une pluralité de batteries rechargeables (200), respectivement, et l'unité de charge (20) charge la pluralité de batteries rechargeables (200) par l'intermédiaire de la pluralité d'extrémités de sortie de puissance (10) ;
dans lequel l'étape de commutation sur le premier mode de charge, conformément au signal de commutation, comprend les étapes ci-dessous consistant à :
charger séquentiellement la pluralité de batteries rechargeables (200) à une première valeur prédéfinie inférieure à une seconde valeur prédéfinie, conformément à un ordre de tensions de batterie, des batteries rechargeables (200), allant de tensions élevées à faibles ; et
commander, à l'unité de charge (20), de charger en parallèle, en activant toutes les extrémités de la pluralité d'extrémités de sortie de puissance (10), toutes les batteries rechargeables (200), une fois de plus, et à la seconde valeur prédéfinie ;
dans lequel l'étape de commutation, sur le second mode de charge, conformément au signal de commutation, comprend l'étape ci-dessous consistant à :
charger séquentiellement la pluralité de batteries rechargeables (200), à la seconde valeur prédéfinie, conformément à un ordre de tensions de batterie, de la pluralité de batteries rechargeables (200), allant de tensions élevées à faibles ; et
dans lequel l'étape de charge séquentielle dans chacun des premier et second modes de charge inclut l'activation de l'extrémité de sortie de puissance (10), qui correspond à la batterie rechargeable (200) à charger, et la mise hors tension des autres extrémités de sortie de puissance (10).

12. Procédé de commande de charge selon la revendication 11, dans lequel l'étape de charge séquentielle de la pluralité de batteries rechargeables (200) à une première valeur prédéfinie conformément à un ordre de tensions de batterie, des batteries rechargeables (200), allant de tensions élevées à faibles, comprend les étapes ci-dessous consistant à :
(a) activer les connexions électriques entre l'unité de charge (20) et la pluralité d'extrémités de sortie de puissance, une par une ;
(b) détecter les tensions de batterie de la pluralité de batteries rechargeables (200), une par une ;
(c) commander, à l'unité de charge (20), de charger la batterie rechargeable présentant la valeur de tension de batterie maximale, à la première valeur prédéfinie ; et répéter les étapes (a) à (c), en vue de charger séquentiellement les batteries rechargeables restantes (200) à la première valeur prédéfinie, conformément à un ordre de tensions de batterie, allant de tensions élevées à faibles.

13. Procédé de commande de charge selon la revendication 11, dans lequel l'étape de commutation sur un second mode de charge, conformément au signal de commutation, comprend les étapes ci-dessous consistant à :
(d) activer les connexions électriques entre l'unité de charge (20) et la pluralité d'extrémités de sortie de puissance, une par une ;
(e) détecter les tensions de batterie de la pluralité de batteries rechargeables (200), une par une ;
(f) commander, à l'unité de charge (20), de charger tout d'abord la batterie rechargeable présentant la valeur de tension maximale, et ensuite charger directement la batterie rechargeable à une seconde valeur prédéfinie ; et
répéter les étapes (d) à (f), en vue de charger séquentiellement les batteries rechargeables restantes (200) à la seconde valeur prédéfinie, conformément à un ordre de tensions de batterie, allant de tensions élevées à faibles.
